# FASCICULE DE BREVET EUROPEEN

(11) **EP 0 729 255 B1**
(45) Date de publication et mention de la délivrance du brevet: **11.04.2007**
(21) Numéro de dépôt: 96400294.3
(22) Date de dépôt: 13.02.1996
(51) Int. Cl.: H04L 29/06

(54) **Procédé d'adaptation automatique des paramètres d'une interface**
Verfahren zum automatischen Anpassen von Parametern einer Schnittstelle
Method for automatic adaptation of interface parameters

(30) Priorité: 21.02.1995 FR 9501998
(43) Date de publication de la demande: 28.08.1996
(73) Titulaire: STMicroelectronics S.A., 92120 Montrouge (FR)
(72) Inventeur: Le van Suu, Maurice, Cabinet Ballot Schmit, 75116 Paris (FR)
(74) Mandataire: Bentz, Jean-Paul

(56) Documents cités:
- EP-A- 0 636 967
- WO-A-90/06027
- US-A- 4 961 225

## Description

La présente invention a pour objet un procédé d'adaptation automatique des paramètres d'une interface. Elle est utilisable en particulier dans le domaine de l'informatique, pour la liaison entre eux d'ordinateurs, de micro-ordinateurs ou de périphériques, dans le domaine de la domotique pour l'utilisation dans des immeubles dit intelligents, ainsi que dans le domaine de l'automobile.

L'invention sera décrite dans le cadre d'un protocole de transmission avec un format dit ASCII, mais son application est transposable facilement à d'autres protocoles et à d'autres formats. En général un message codé en protocole ASCII est constitué d'un premier bit dit de start, des données incluant un bit de parité et, à la fin, d'un bit dit de stop. Les différents messages sont envoyés les uns après les autres avec un même ordre. A la réception, il faut décapsuler l'information dans cet ordre. Ceci signifie qu'il faut reconnaître le bit de start et bit de stop, extraire les données et les vérifier en fonction de la valeur du bit de parité. La nature du bit de start et de stop, le nombre de bits des données, la nature de la parité et le débit des différents bits sont autant de paramètres qui différencient les protocoles.

Afin de pouvoir échanger les informations et se comprendre il faut donc configurer l'émetteur et le récepteur pour qu'ils puissent accomplir cette reconnaissance et ce traitement. Ces configurations impliquent généralement l'intervention humaine. En effet, ces configurations sont commandables par une batterie de petits interrupteurs ou commutateurs manipulables manuellement. Ces interrupteurs et commutateurs se trouvent généralement derrière les appareils et parfois il faut même démonter leur face arrière. Bien souvent, il faut se reporter à la notice d'utilisation et/ou au mode d'emploi pour effecteur la configuration. Cette configuration n'est par ailleurs pas tellement facile, du fait que les interrupteurs et commutateurs sont souvent difficiles d'accès.

Ce mode d'échange comporte un autre inconvénient. Quand on se connecte à un autre type d'appareil, il faut recommencer les mêmes opérations. C'est le cas par exemple pour les imprimantes, les télécopieurs, les téléphones, les relevés de mesures par liaison RS232, les émulateurs, etc...

Actuellement, tous les appareils possèdent un circuit interface dédié qui exécute ce type de tâche indépendant du microcontrolleur et du microprocesseur de l'appareil. Dès l'instant qu'on change de lieu de connexion, il faut s'assurer que la configuration nouvelle est bien identique à l'ancienne.

D'autre part, quand il s'agit de permettre à l'appareil de supporter plusieurs types de protocoles différents, il est prévu premièrement de multiplier le nombre de circuits d'interface spécialisé (en correspondance au nombre de protocoles à supporter). Deuxièmement il faut reconnaître les protocoles reçu et orienter automatiquement leur réception sur un circuit d'interface adapté. La reconnaissance est faite par des circuits spécifiques qui effectuent en même temps l'orientation. Ces circuits spécifiques peuvent agir comme des filtres, et seul celui correspondant vraiment au protocole reçu transmet les signaux utiles.

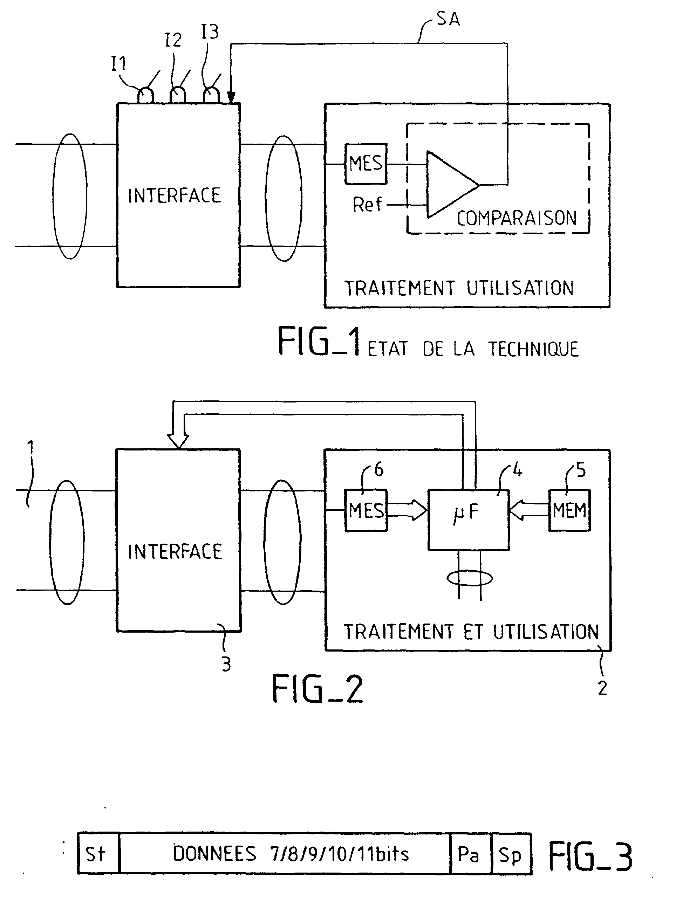

La figure 1 montre un autre type de circuits interface de l'état de la technique. Le circuit interface montré comporte des interrupteurs commutateurs manuels I1, I2, I3 ainsi qu'une liaison SA de sélection automatique reliant un circuit symbolique de comparaison du message transmis à une référence REF à une entrée de commande de l'interface.

En général les signaux de contrôle, transmis par la liaison SA, de ces circuits interfaces sont différents. De ce fait, il faut multiplier le nombre de bus de contrôle pour leur connexion avec le microprocesseur ou micro-contrôleur de l'appareil qui traite et utilise les messages reçus.

La plupart du temps, le bus de données ne pose pas trop de problème. Encore que parfois l'ordre des bits de données est inversé. Tantôt le poids du bit le plus fort se situe à gauche et tantôt le poids du bit le plus fort se situe à droite. Dans ce cas, soit le circuit d'interface réalise la fonction d'inversion. Soit, car bien souvent ce n'est pas le cas, c'est au micro-contrôleur ou processeur de l'appareil de réaliser ce type d'inversion. Dans ce cas précis, une partie des ressources du microprocesseur ou contrôleur est utilisée pour effectuer cette tâche secondaire et ce au détriment de son efficacité. Parfois on rencontre des problème d'impossibilité pour des protocoles à très fort débit d'informations.

Pour tenter de pallier ce type de problème on multiplie donc le nombre de circuits d'interface et/ou le nombre de cartes dédiées à la communication

La société actuelle a besoin de plus en plus d'échanger des informations, d'où de plus en plus de réseaux de communications qui par nature seront toujours différents les uns des autres. Dans le domaine de la domotique par courant porteur, par exemple, la tendance actuelle est de véhiculer les informations à travers le réseau avec des informations de données de type ASCII ou encore de type Home System, équivalent à ASCII.

Dans le domaine automobile, on utilise des techniques de multiplexage pour économiser des kilomètres de fils de cuivre et simplifier la fabrication, l'entretien etc... de la voiture. C'est un bon concept et une bonne approche. Malheureusement pour des raisons de politique, de stratégie commerciale, et de lutte d'influence on voit apparaître plusieurs types de protocoles par exemple les protocoles: VAN, CAM, ABB et J1850.

Le VAN est un protocole français, le CAM et l'ABB sont des protocoles allemands, le protocole J1850 est en provenance des Etats Unis.

Chaque équipementier produit des circuits d'interface spécifiques pour ses besoins propres. Ici on voit apparaître quatre circuits d'interface de reconnaissance d'informations. Un automobiliste qui achète une voiture de marque Y est obligé pour l'entretien de sa voiture de l'amener aux concessionnaires de la marque Y. Autrement, aucune opération d'entretien ne peut être réalisée. Par exemple par l'intermédiaire de son appareil de diagnostic, un autre concessionnaire ne peut pas détecter l'organe défectueux car son appareil ne comprend et ne communique qu'avec un seul type de protocole qui n'est pas celui choisi par la marque Y.

Pour que l'appareil de diagnostic comprenne l'un ou l'autre protocoles, il faut que l'appareil soit équipé de deux circuits d'interface capables de traiter ces informations et de comprendre le message et de transférer ces données reçues vers le microprocesseur ou micro-contrôleur. On peut continuer à citer des exemples de ce type.

Le document WO-A-90-06027 (Datapoint Corp.) décrit un interface de réseau adaptable automatiquement selon la capacité opérationelle de chaque noeud, en particulier selon le débit de données.

L'idée de l'invention est basée premièrement sur l'autre type de circuit d'interface montré symboliquement sur la figure 1, et deuxièmement sur la logique floue. L'idée est de traiter tous les protocoles (par exemple (VAN, CAM ABB, J1850) par un même circuit, avec un raisonnement en langage naturel humain qui simplifie du même coup la complexité du circuit de comparaison de la figure 1. Ainsi, après une phase de mesure, dans un circuit MES, des caractéristiques du message reçu, plutôt que d'appliquer ces signaux de mesure à un circuit d'orientation spécifique, on les applique à un circuit à logique floue dont la souplesse de mise en oeuvre convient bien au caractère divers et fluctuant des divers protocoles existants.

La conséquence la plus intéressante de l'invention est de réduire le coût du matériel du fait que le nombre des connecteurs ainsi que le nombre des circuits d'interface sont alors réduits. Par exemple, un seul circuit d'interface pour les applications de la voiture, basé sur la logique floue, saura traiter les quatre types de protocoles évoqués ci-dessus et notamment adapter la vitesse de transmission. En effet la vitesse de transmission des informations peut varier de 75 bits par seconde à 1 Mbits par seconde.

L'invention a donc pour objet un procédé d'adaptation automatique des paramètres de transmission d'une interface, connectée à une liaison, au protocole de transmission de signaux binaires qu'elle reçoit, caractérisé en ce que
- on mémorise dans une mémoire un ensemble de fonctions d'appartenance en vitesse, chacune de ces fonctions comportant des correspondances entre des valeurs de degrés d'appartenance et des valeurs de vitesse de transmission,
- on mémorise dans cette mémoire en liaison avec un microprocesseur à logique floue un ensemble de règles permettant la sélection de paramètres de transmission de l'interface en fonction des différentes fonctions d'appartenance,
- on mesure pour les signaux reçus leurs différents degrés d'appartenance aux différentes fonctions d'appartenance en vitesse, et
- on adapte l'interface en fonction de paramètres sélectionnés par application, dans le microprocesseur, des règles aux degrés d'appartenance aux différentes fonctions d'appartenance en vitesse mesurés, en évaluant un degré de vraisemblance d'une variable résultat.

De même, dans le domaine de la domotique ou de l'informatique, il s'agira en plus de reconnaître le format de transmission en même temps que la vitesse de transmission qui peut varier de 100 bits par seconde à 4800 bits par seconde voire plus dans certains cas. Dans ce cas on perfectionnera le procédé en mémorisant en plus dans cette mémoire un ensemble de fonctions d'appartenance en format, chacune de ces fonctions comportant des correspondance entre des degrés d'appartenance et des nombres de bits de format d'un message type selon des protocoles de transmission.

L'invention peut être applicable sur tous types de médias de transmission: radiofréquence, infra-rouge, câble coaxial, paire torsadée, courant porteur,...

L'invention sera mieux comprise à la lecture de la description qui suit et à l'examen des figures qui l'accompagnent. Elles ne sont données qu'à titre indicatif et nullement limitatif de l'invention. Les figures montrent:
- Figure 1, déjà commentée: une interface de l'état de la technique;
- Figure 2: une représentation symbolique d'un système utilisable pour mettre en oeuvre le procédé de l'invention;.
- Figure 3: la représentation d'un message binaire type;
- Figure 4: la représentation détaillée d'un système pour la mise en oeuvre du procédé selon l'invention;
- Figure 5a à 5e: des exemples de fonctions d'appartenance permettant, en fonction des différents paramètres du protocole mesuré de faire la sélection.

La figure 2 montre un dispositif utilisable pour mettre en oeuvre le procédé d'adaptation de l'invention. Dans celui-ci un liaison de transmission 1 est relié à un appareil 2 de traitement et d'utilisation des signaux transmis par l'intermédiaire d'une interface 3. Dans un exemple, l'appareil 2 comporte un microprocesseur flou *µ*F, référencé 4, utilisable pour mettre eu oeuvre des règles de sélection ainsi que pour mémoriser des fonctions d'appartenance, notamment en vitesse. Ces fonctions d'appartenance sont, conformément aux figure 5a à 5b des couples adresses de données-valeur de données, tels que l'adresse représente la valeur d'une variable, et tel que la valeur de la donnée représente un degré (normalement compris entre 0 et 1) attribué pour chaque valeur de la variable. Les règles sont un ensemble de combinaisons de conditions du type SI-ALORS. Pour simplifier, dans un premier temps concernant le domaine de l'automobile, on n'étudiera que l'adaptation à la vitesse de transfert. Le microprocesseur flou est par exemple un microprocesseur du type WARP 1.1 ou WARP 2 fabriqué par la société SGS THOMSON MICROELECTRONICS.

En plus du microprocesseur 4, de la mémoire 5 qui contient ces règles, ces fonctions d'appartenance et un programme préenregistré pour les appliquer, l'appareil 2 comporte d'une manière classique un circuit MES de mesure 6 pour mesurer, sur le signal reçu, physiquement, les caractéristiques de ce signal qui révèlent son protocole de transmission. Un tel circuit de mesure est par ailleurs déjà existant dans l'état de la technique. Par exemple, dans la demande de brevet français 92 15039 déposée le 14 Décembre 1992, il a été prévu un circuit câblé d'interfaçage domotique faisant notamment appel à une mesure des caractéristiques des signaux reçus, à une conversion en binaire des signaux analogiques mesurés, et à la réalisation, avec un microprocesseur du circuit de comparaison permettant la télécommande de l'interface. Cependant, la programmation de ce microprocesseur lui-même est spécifique pour réaliser ce circuit de comparaison et ne peut être transposée facilement à de multiples situations.

La figure 3 montre un exemple type de message transmis sur une liaison. Un message comporte en entête une information de départ, dite bit de start St. Dans le protocole ASCII c'est un premier bit à 1 dont on détecte la transition du front de montée. Dans d'autres protocoles, par exemple le protocole dit I2C, le bit de start est détecté par la présence d'un front de montée sur un bus de donnée au moment où l'horloge, transmise par un des fils d'un bus de contrôle, est à un état haut. D'autres allures de bit de start sont possibles, il est même possible d'avoir un groupement de bits indiquant le début du message.

Dans le format élémentaire ASCII les données sont ensuite codées avec des nombres de bits variables: les longueurs de bits les plus fréquemment retenues sont 7,8, 9, 10 et 11 bits. Après un tel message il est envoyé un bit Pa dit de parité. Soit ce bit de parité est un complément au contenu du message pour le rendre pair ou impair selon le protocole choisi, soit ce bit de parité est un bit toujours à zéro ou toujours à un selon le protocole choisi. Enfin à la fin du message on transmet un bit de fin, dit bit de stop Sp. Le bit de stop est reconnaissable éventuellement par sa forme, il dure par exemple plus longtemps qu'un bit normal, ou par son format: il peut être constitué lui-même de plusieurs bits.

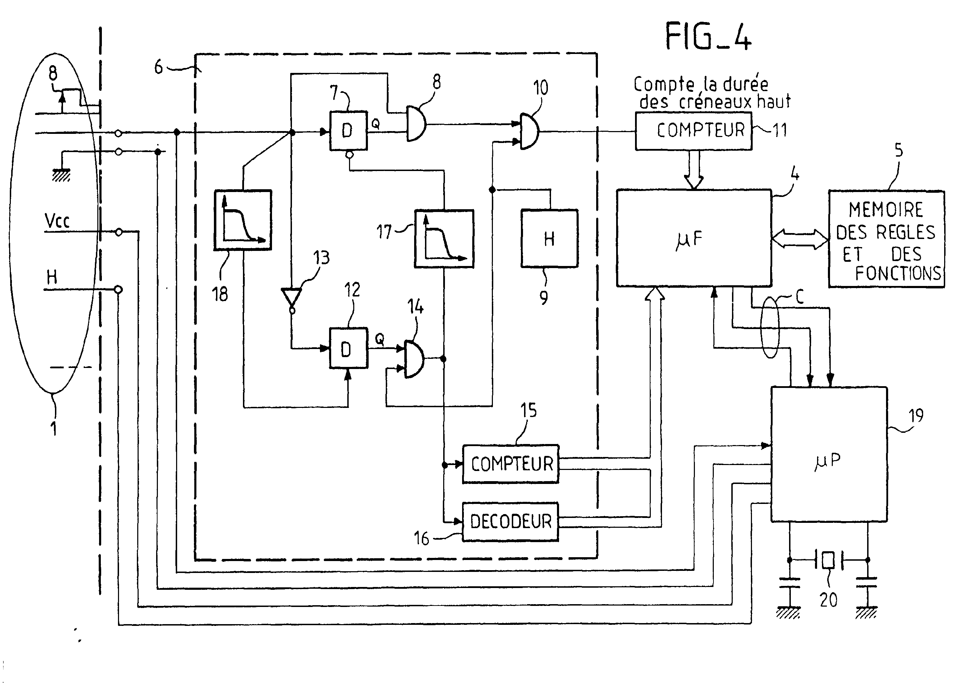

La figure 4 montre connecté à la liaison 1 un exemple détaillé d'un circuit de mesure 6. Ce circuit de mesure servira à mesurer essentiellement la vitesse de transfert, et par ailleurs le format des bits, la valeur du bit de parité, la valeur du bit de stop. Le circuit de mesure 6 comporte dans ce but une bascule D7 recevant en entrée les signaux transmis par un des fils du bus de données (cas de transmission parallèle), ou par le fil de transmission de données (dans le cas d'une transmission série). La bascule D7 transmet le front de montée du signal qu'elle reçoit, sa sortie Q. La sortie Q de la bascule 7 est connectée à l'entrée d'une porte ET 8 qui reçoit également le signal transmis. Pendant le premier bit reçu, le bit de start, la porte ET 8 délivre en sortie un état 1. Une sortie d'une horloge 9 ainsi que la sortie de la porte ET 8 sont connectées à l'entrée d'une deuxième porte ET 10 qui délivre de ce fait en sortie un nombre d'impulsions dépendant de la durée des créneaux hauts du signal d'entrée. Ce nombre d'impulsions est compté dans un compteur 11. En fin de comptage, le contenu du compteur 11 est transmis au microprocesseur de logique floue 4. Il sert d'adresse pour représenter la durée de bit et pour en déduire un degré d'appartenance de la durée mesurée à une fonction d'appartenance en vitesse. Cette fonction d'appartenance en vitesse est elle-même mise en oeuvre dans l'ensemble des règles mémorisées dans la mémoire 5 pour déterminer par une commande C à destination de l'interface comment celle-ci doit être configurée. Le microprocesseur flou étant un microprocesseur très rapide (avec une horloge interne à 50Mhz par exemple) on peut considérer qu'aux vitesses de transmission évoquées la configuration de l'interface en fonction de l'ordre C est alors immédiate.

Pour la mesure des autres paramètres du protocole reçu, on utilise dans l'exemple représenté une autre bascule D 12. Celle-ci est déclenchée par un front de descente du signal d'entrée, en connectant l'entrée de commande de cette bascule D12 à la connexion d'entrée par l'intermédiaire d'un inverseur 13. La sortie Q de la bascule 12 est elle-même reliée en entrée à une porte ET 14 qui reçoit également sur une autre entrée le signal de l'horloge 9. La sortie de la porte ET 14 est reliée à une entrée d'un autre compteur 15 qui effectue un comptage des bits du message. La sortie du compteur 15 est reliée à un décodeur 16 qui exploite le résultat de comptage du compteur 15 par un décodage pour connaître la nature des bits et le format du message. Ainsi le compteur 15 compte un certain nombre d'impulsions d'horloge 9 qui, divisé par le premier nombre d'impulsions d'horloge délivré par le compteur 11, donne le nombre de bits à zéro. Puis le compteur 15 compte à nouveau la durée des bits à un du message. Il apparaît aussi qu'on peut par ailleurs petit à petit, en en faisant la moyenne, approcher plus finement la mesure de la durée du bit et en déduire plus précisément la vitesse, notamment si celle-ci doit changer au cours d'une transmission. En pratique, après le comptage du bit de start, le résultat du compteur 11 est aussi décodé, par exemple dans le décodeur 16 pour mesurer des succession de bits à un. Après chaque comptage les compteurs 11 et 15 sont remis à zéro, par exemple en même temps que les bascules D. Le décodeur 16 transmet alors au microprocesseur 4 une information représentative du nombre de bits, 8, 9, 10 ou 11, de données contenues dans le message.

Pour la remise à zéro des bascules D 7 et 12, on utilise deux monostables 17 et 18 connectés respectivement entre l'entrée de remise à zéro de la bascule 7 et la sortie de la porte 14 et entre la connexion d'entrée du signal reçu et l'entrée de remise à zéro de la bascule 12.

Les commandes C transmises à un microprocesseur 19 de l'appareil permettent à celui-ci, notamment s'il est du type décrit dans la demande de brevet français citée ci-dessus, d'adapter ses différents circuits au protocole ainsi reconnu.

Ces signaux de commande comporteront essentiellement un signal dit STROBE permettant d'informer le microprocesseur 19 qui gère l'interface que la donnée reçue est disponible conformément au type de codage et de transmission reconnu. L'autre signal est un signal d'interruption, IRQ. Il informe ce microprocesseur 19 que le décodage du mot, qu'il soit de 8, 9, 10 ou 11 bits, est effectué. En retour, le microprocesseur 19 fait envoyer au microprocesseur flou 4 un signal d'accusé de réception ACQ pour l'informer que l'information a été prise en compte. Plutôt que d'avoir une horloge 9 séparée, on préfèrera produire un signal d'horloge à partir d'un quartz 20 attaché au microprocesseur 19.

Le microprocesseur 19 reçoit également, notamment s'il est réalisé dans un circuit intégré en même temps que l'interface, les signaux disponibles sur la liaison 1. Dans une variante préférée, le microprocesseur 4 et le microprocesseur 19 sont réalisés sur un même circuit intégré.

La figure 5a montre, en ce qui concerne la détection de vitesse de transmission, la description des fonctions d'appartenance mémorisées dans la mémoire 5. Sur cette figure, on a présenté de manière symbolique deux axes: l'axe du temps et l'axe des degrés d'appartenance. Sur l'axe du temps on a fait figurer les différentes valeurs possibles des durées de bits correspondant aux créneaux haut des bits transmis. Ainsi, à 19200 bits par seconde, la courbe V1 montre qu'on attribue un degré 1 à toute valeur de la durée du bit comprise entre 50 microsecondes et 60 microsecondes. Ceci correspond par exemple aux limites normées de tolérance de durée du bit, autour de 52 microsecondes pour une transmission à 19200 bits par seconde. De manière à utiliser au mieux les techniques de la logique floue on prévoit même que la courbe V1 comporte des rampes ascendantes et descendantes entre, respectivement 30 microsecondes et 40 microsecondes et 60 microsecondes et 70 microsecondes pour attribuer un degré d'appartenance croissant, ou décroissant linéairement entre zéro et un si la valeur mesurée est en dehors de 40-60. Ainsi, si le signal mesuré avec le compteur 11 délivre une information correspondant à 52 microsecondes, on dira que le degré d'appartenance à la fonction V1 pour la valeur mesurée est de un. Si le signal mesuré vaut 35 microsecondes, on dira que le degré d'appartenance pour la fonction V1 est 0,5. En V2, V3, V4, V5 etc.. on a fait figurer des valeurs nominales de durée des bits pour des vitesse de transmission à 9600, 4800, 2400, 1200 etc... bits par seconde. On a par ailleurs également fait figurer des fonctions d'appartenance dites X1, X2 etc... correspondant à des vitesses plus grandes de V1, ou intermédiaires entre les vitesses Vi et Vi+1. Pour reprendre l'exemple précédent, une valeur de durée de bit égale à 52 microsecondes s'interprètera comme un degré d'appartenance à la fonction V1 valant 1 et un degré d'appartenance à toutes les autres fonctions égal à zéro.

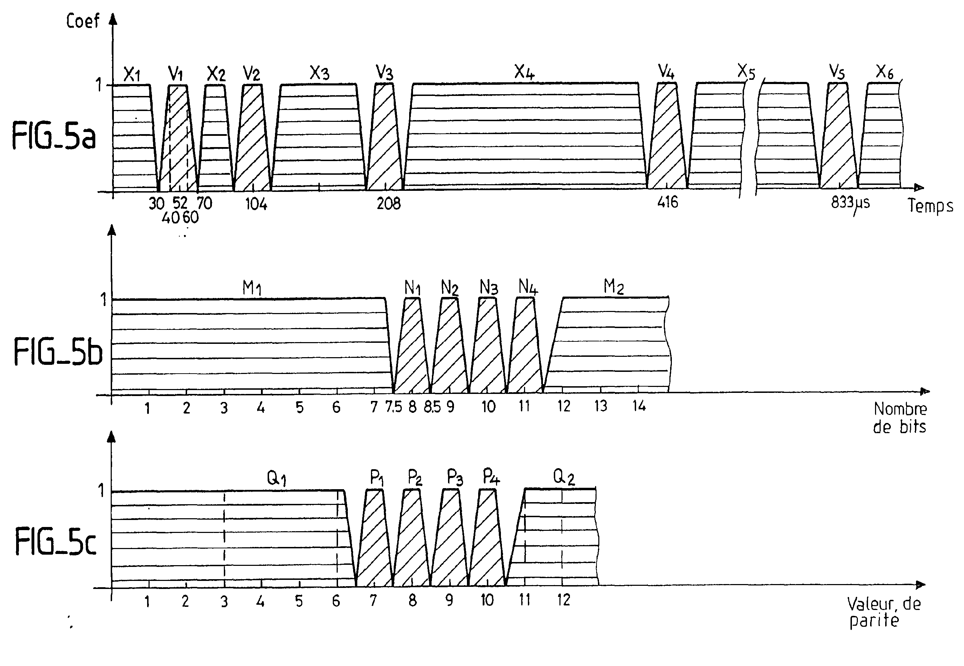

La figure 5b montre dans les mêmes conditions les fonctions d'appartenance en nombre de bits du message. Normalement le nombre de bits du message est un nombre entier. Cependant, comme indiqué ci-dessus le compteur 15 compte des bits de l'horloge 9 et non les bits réellement transmis dans le message. En effet ceci n'est pas vraiment possible puisque le message peut comporter des bits à zéro qui ne seraient eux-mêmes pas comptables puisque le signal ne changerait pas d'état. Il est donc possible que le nombre de bits d'horloge comptés, multiplié par la période de l'horloge 9 et divisé par la durée de bits mesurée par le compteur 11 ne soit pas exactement un chiffre entier. Par exemple, il est possible que les retards impliqués par les différentes bascules ou les différentes portes fassent perdre une certaine précision au comptage. Ceci n'est pas gênant en retenant des fonctions d'appartenance, comme celle montrées sur la figure 5b où, en abscisse, on a figuré le nombre de bits comptés et en ordonnée le degré d'appartenance. Par exemple on dira qu'on attribuera un degré d'appartenance à la fonction N1 (relative à 8 bits) si le nombre de bits mesuré est compris entre 7,8 et 8,2. Par contre si ce nombre de bits est compris entre 7,5 et 7,8 ou entre 8,2 et 8,5 on attribuera un degré proportionnellement réduit. Le microprocesseur 4 recevra donc pour chacune des fonctions N1 à N4 représentées un degré d'appartenance.

Bien que les fonctions d'appartenance N1 à N4 soient ici représentées séparées il serait cependant possible, pour tenir compte de mauvaises conditions de réception, d'incliner plus les rampes de ces fonctions d'appartenance, de telle façon que les fonctions ne soient plus séparées. Ainsi, plutôt que d'avoir un degré d'appartenance à toutes les fonctions d'appartenance égal à zéro, une valeur de nombre de bits égale à 8,5 pourrait se voir affecter un degré d'appartenance à 0,25 pour la fonction N1, 0,25 pour la fonction N2 et 0 pour les autres. Ceci permet, en application des règles de logique floue de lever une ambigüité par ailleurs rédhibitoire dans le cas des circuits de type spécifiques de l'état de la technique.

La figure 5c montre selon un axe d'abscisse des valeurs de parité et un axe d'ordonnée des degré d'appartenance à des fonctions correspondantes. Ces fonctions d'appartenance sont essentiellement utilisables pour les formats de type ASCII. Ainsi la fonction d'appartenance P1 mesure le fait que le septième bit de 8 soit égal à un ou zéro. La fonction P2 mesure le fait que le huitième bit de 9 soit égale à 1 ou zéro et ainsi de suite pour les fonctions P3 et P4. La parité est mesurée en permanence. Le bit de parité est celui qui précède le bit de stop. Une fois ce dernier reconnu, on connaît le format du message, la valeur du bit de parité et la valeur des bits de données. On peut alors déterminer si la parité du message est paire ou impaire. Pour le message suivant on fait de même. Ainsi de suite la parité sera mesurée, par exemple avec une valeur zéro si elle est paire et un si elle est impaire. En accumulant les valeurs mesurées pour plusieurs messages successifs, et en faisant la moyenne on détermine une valeur qui n'est pas forcément zéro ou un du fait des bruits de transmission. La fonction d'appartenance, en logique floue, permet dans ce cas de trancher sans ambiguïté, et par ailleurs de rejeter à coup sûr les messages dont la parité est mauvaise et qui sont donc considérés comme mal reçus.

La figure 5d montre, de la même manière que pour la figure 5a, la prise en compte par des fonctions SP1, SP2, SP3 et ainsi de suite la durée du bit de stop et le degré d'appartenance aux différentes fonctions attribuées. La durée du bit de stop renseigne sur le type de protocole retenu.

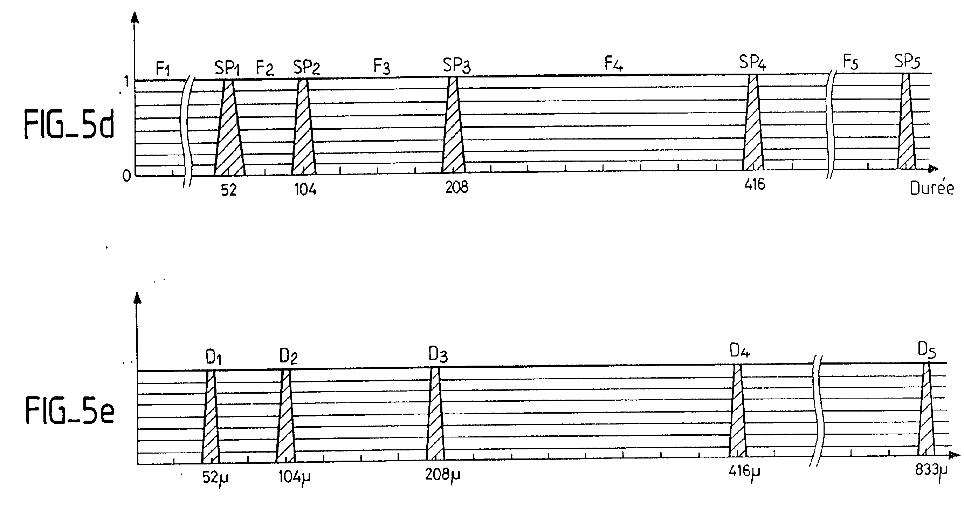

La figure 5e montre les variables de sortie du système par des fonctions d'appartenance D1 à D5 quand il s'agit de ne traiter que la vitesse. Les fonctions d'appartenance de résultat sont directement interprétables comme des ordres transmissibles sur le bus C de commande. La fonction D1 valant 1 est par exemple le signe que la vitesse de 19200 bits par seconde a été retenu. Les fonctions d'appartenance en résultat ont obligatoirement des flancs raides. En effet, il s'agit de donner des ordres, ceux-ci ne peuvent être donnés à moitié.

Les règles de logique floue également enregistrées dans la mémoire 5 sont du type apparaissant dans le tableau ci-après:
1. IF V is V1 and N is N1 and P is not P1 and SP is SP1 THEN D is D1
2. IF V is V1 and N is N1 and P is P1 and SP is SP1 THEN D is D1
3. IF V is V2 and N is N2 and P is P2 and SP is not SP2 THEN D is D2
4. IF V is V2 and N is N1 and P is P1 and SP is SP1 THEN D is D2
5. IF V is V2 and N is N3 and P is P3 and SP is not SP3 THEN D is D2
6. IF V is V2 and N is N1 and P is P1 and SP is SP1 THEN D is D2
7. IF V is V2 and N is N2 and P is P2 and SP is SP2 THEN D is D2
8. IF V is V2 and N is N3 and P is P3 and SP is SP3 THEN D is D3
9. IF V is V2 and N is N1 and P is P2 and SP is not SP1 THEN D is D0.

La signification de la première ligne est que si le degré d'appartenance à la fonction V1 (19200) vaut 1, si la valeur de la variable N est égale à N1 (le mot reçu est un mot de 8 bits), si la valeur de la parité P n'est pas égale à 1, et si la valeur du bit de stop St est conforme à la vitesse de transmission, alors la variable de sortie D est égale à la sortie D1 (le mot reçu est à la vitesse de 19200, la parité est zéro et le mot à 8 bits). Dans ce cas, un décodeur contenu en fait dans le microprocesseur 4 produit le signal C à partir de cette sortie D1.

Pour la seconde ligne le mot reçu est conforme au standard ASCII également, la vitesse est à 19200, la parité est 1 et le mot est à 8 bits.

Sur la troisième ligne on a affaire à un mot de 9 bits, une vitesse de 9600 et une parité nulle.

Pour la quatrième ligne un mot de 8 bits, une vitesse de 9600 et une parité nulle.

Pour la cinquième ligne un mot de 10 bits, une vitesse de 9600 et une parité nulle.

Pour les sixièmes, septième et huitième lignes, la vitesse est de 9600, la parité vaut un et les mots sont de 8, 9 et 10 bits respectivement.

Pour la neuvième ligne la sortie est nulle, ceci veut dire que le message n'est pas reconnu et n'est pas conforme à un des standards attendus. Il n'est pas enregistré dans la mémoire 5: il n'est pas possible de configurer l'interface du microprocesseur 19. On voit qu'on peut ainsi facilement mettre à jour l'interface si de nouveaux protocoles apparaissent: il suffit d'augmenter le jeu des règles. Eventuellement, il peut être nécessaire de créer d'autres fonctions d'appartenance intermédiaires.

Si plusieurs règles sont impliquées, dans le cas où les fonctions d'appartenance se recouvrent, on combine les résultats de ces règles pour déterminer le protocole détecté. La combinaison est une combinaison de type produit ou de type minimum connue dans le domaine de la logique floue.

## Revendications

1. - Procédé d'adaptation automatique des paramètres de transmission d'une interface, connectée à une liaison, au protocole de transmission de signaux binaires qu'elle reçoit, **caractérisé en ce que**
- on mémorise dans une mémoire un ensemble de fonctions d'appartenance en vitesse, chacune de ces fonctions comportant des correspondances entre des valeurs de degré d'appartenance et des valeurs de vitesse de transmission,
- on mémorise dans cette mémoire en liaison avec un microprocesseur à logique floue un ensemble de règles permettant la sélection de paramètres de transmission de l'interface en fonction des différentes fonctions d'appartenance,
- on mesure pour les signaux reçus leurs différents degrés d'appartenance aux différentes fonctions d'appartenance en vitesse, et
- on adapte l'interface en fonction de paramètres sélectionnés par application dans le microprocesseur des règles aux degrés d'appartenance aux différentes fonctions d'appartenance en vitesse mesurés, en évaluant un degré de vraisemblance d'une variable résultat.

2. - Procédé selon la revendication 1, **caractérisé en ce que**
- on mémorise dans cette mémoire un ensemble de fonctions d'appartenance en format, chacune de ces fonctions comportant des correspondance entre des degrés d'appartenance et des nombres de bits de format d'un message type selon des protocoles de transmission.

3. - Procédé selon l'une des revendications 1 à 2, **caractérisé en ce que**
- on mémorise dans cette mémoire un ensemble de fonctions d'appartenance en parité, chacune de ces fonctions comportant des correspondance entre des degrés d'appartenance et des numéros de bits dans les message transmis.

4. - Procédé selon l'une des revendications 1 à 3, **caractérisé en ce que**
- on mémorise dans cette mémoire un ensemble de fonctions d'appartenance en durée de bit de stop, chacune de ces fonctions comportant des correspondance entre des degrés d'appartenance et des durées de bit de stop.

5. - Procédé selon l'une des revendications 1 à 4 **caractérisé en ce que**:
- on échantillone plusieurs fois pendant leur transmission chacun des bits des signaux binaires reçus pour en mesurer les différents degrés d'appartenance aux différentes fonctions.

## Claims

1. A method for the automatic matching of the transmission parameters of an interface (3), connected to a link (1), with the protocol for the transmission of binary signals that it receives, wherein:
- a set of membership functions in terms of transmission rate is memorized in a memory (5), each of these functions comprising relationships of correspondence between values of degrees of membership and values of transmission rate,
- a set of rules is memorized in this memory (5) in relation with a fuzzy logic microprocessor (4), this set of rules enabling the selection of transmission parameters of the interface (3) according to the different membership functions,
- for the signals received, their different degrees of membership with respect to the different functions of membership in terms of transmission rate are measured, and
- the interface (3) is matched as a function for selected parameters by the application, in the microprocessor (4), of the rules to the measured degrees of membership of the different membership functions in terms of transmission rate, by assessing a degree of likelihood of a result variable.

2. A method according to claim 1, wherein
- a set of membership functions in terms of format is memorized in this memory (5), each of these functions comprising relationships of correspondence between degrees of membership and numbers of format bits of a typical message according to transmission protocols.

3. A method according to claim 1, wherein:
- a set of membership functions in terms of parity is memorized in this memory (5), each of these functions comprising relationships of correspondence between degrees of membership and numbers of format bits in the message transmitted.

4. A method according to claim 1, wherein:
- a set of membership functions in terms of stop bit duration is memorized in this memory (5), each of these functions comprising relationships of correspondence between degrees of membership and values of stop bit duration.

5. A method according to one of the claims 1 to 4, wherein:
- each of the bits of the binary signals received is sampled several times during its transmission to measure its different degrees of membership with respect to the different functions.

## Patentansprüche

1. Verfahren zum automatischen Anpassen von Übertragungsparametern einer Schnittstelle, die an einen Anschluss angeschlossen ist, an das Übertragungsprotokoll von binären Signalen, die sie empfängt, **dadurch gekennzeichnet, dass**
- in einem Speicher eine Gruppe von Geschwindigkeitszugehörigkeitsfunktionen gespeichert wird, wobei jede dieser Funktionen Zuordnungen zwischen Zugehörigkeitsgradwerten und Übertragungsgeschwindigkeitswerten aufweist,
- in diesem Speicher in Verbindung mit einem Mikroprozessor mit Fuzzi-Logik eine Gruppe von Regeln gespeichert wird, welche die Auswahl von Übertragungsparametern der Schnittstelle in Abhängigkeit von den verschiedenen Zugehörigkeitsfunktionen ermöglichen,
- bei den empfangenen Signalen ihre verschiedenen Zugehörigkeitsgrade zu den verschiedenen Geschwindigkeitszugehörigkeitsfunktionen gemessen werden und
- die Schnittstelle in Abhängigkeit von Parametern angepasst wird, die durch Anwendung von Regeln auf die gemessenen Zugehörigkeitsgrade zu den verschiedenen Geschwindigkeitszugehörigkeitsfunktionen in dem Mikroprozessor ausgewählt sind, wobei ein Wahrscheinlichkeitsgrad einer Ergebnisvariablen abgeschätzt wird.

2. Verfahren gemäß Anspruch 1, **dadurch gekennzeichnet, dass**
- in diesem Speicher eine Gruppe von Formatzugehörigkeitsfunktionen gespeichert wird, wobei jede dieser Funktionen Zuordnungen zwischen Zugehörigkeitsgraden und Formatbitmengen einer Nachricht der Art gemäß den Übertragungsprotokollen aufweist.

3. Verfahren gemäß einem der Ansprüche 1 bis 2, **dadurch gekennzeichnet, dass**
- in diesem Speicher eine Gruppe von Paritätszugehörigkeitsfunktionen gespeichert wird, wobei jede dieser Funktionen Zuordnungen zwischen Zugehörigkeitsgraden und Bitzahlen in den übertragenen Nachrichten aufweist.

4. Verfahren gemäß einem der Ansprüche 1 bis 3, **dadurch gekennzeichnet, dass**
- in diesem Speicher eine Gruppe von Längen-Zugehörigkeitsfunktionen eines Stoppbits gespeichert wird, wobei jede dieser Funktionen Zuordnungen zwischen Zugehörigkeitsgraden und Stoppbitlängen aufweist.

5. Verfahren gemäß einem der Ansprüche 1 bis 4, **dadurch gekennzeichnet, dass**
- mehrere Male während ihrer Übertragung jedes der Bits der empfangenen binären Signale abgetastet wird, um seine unterschiedlichen Zugehörigkeitsgrade zu den verschiedenen Funktionen zu messen.
